# EUROPEAN PATENT APPLICATION

(11) **EP 3 800 439 A1**
(43) Date of publication of application: **07.04.2021**
(21) Application number: 19201235.9
(22) Date of filing: 03.10.2019
(51) Int. Cl.: G01C 3/08, G01C 15/00, G01S 7/48, G01S 7/481

(54) **SURVEYING INSTRUMENT**

(71) Applicant: Hexagon Technology Center GmbH, 9435 Heerbrugg (CH)
(72) Inventor: STUTZ, Reto, CH-9434 Au (CH); LAIS, Josef, CH-9437 Marbach (CH)
(74) Representative: Kaminski Harmann

(57) **Abstract**

The invention relates to a surveying instrument comprising a distance meter, wherein the distance meter is configured for projecting a perceptibility beam onto an object and measuring a distance to the object, wherein the distance meter is configured for running a perceptibility enhancing mode, wherein, when running the perceptibility enhancing mode, the distance meter is directed to emit the perceptibility beam with a modulation, wherein the modulation has a switching frequency of at least 0.25 Hz but lower than 200 Hz.

## Description

### FIELD OF THE INVENTION

The present invention relates to a surveying instrument. A surveying instrument according to the invention is particularly chosen from one of a handheld distance meter, a 3D measuring and templating device, a total station, and a laser tracker. With that, the fields of the invention are civil engineering, construction, architecture, geodesy, and industrial metrology.

### BACKGROUND OF THE INVENTION

Such surveying instruments commonly have a perceptibility beam, e.g. a laser pointer, which is used for aiming at targets as preparation of a measurement, for staking out landmarks, and/or for laying out elements (such as pipes or wires) in or on a building. The perceptibility of a projection of said beam is very important in such use cases.

Modern safety requirements are the reason that the beam projections on objects are becoming fainter and thus less perceptible. As an example, reducing the laser class from 3R to 2 is a five-times brightness reduction. Especially when using the perceptibility beam outside at bright daylight, it is at times challenging to recognise the projection.

### OBJECT OF THE INVENTION

It is therefore an object of the invention to provide a surveying instrument that allows for an enhanced perceptibility of the projected perceptibility beam. A surveying instrument according to the invention consequently allows for a faster, more accurate, more productive, and yet equally safe, measuring or stake-out process.

### SUMMARY OF THE INVENTION

The invention relates to a surveying instrument comprising a distance meter, wherein the distance meter is configured for projecting a perceptibility beam onto an object and measuring a distance to the object, wherein the distance meter is configured for running a perceptibility enhancing mode, wherein, when running the perceptibility enhancing mode, the distance meter is directed to emit the perceptibility beam with a modulation, wherein the modulation has a switching frequency of at least 0.25 Hz but lower than 200 Hz, in particular a switching frequency of between 0.25 Hz and 20 Hz.

In other words: When running the perceptibility enhancing mode, the distance meter is directed to emit the perceptibility beam with a pattern, wherein the pattern comprises at least two transitions between two different states of the perceptibility beams with regard to its amplitude, phase, polarisation, wavelength, or pulse frequency, wherein an interval between the states is between 0.005 and 4 seconds.

In one embodiment, the perceptibility beam is a measuring beam, wherein the distance meter comprises a measuring beam emitter configured for emitting the measuring beam and a measuring beam receiver configured for receiving a reflection of the measuring beam, and wherein the measuring beam is used for measuring the distance.

In another embodiment, the distance meter comprises a perceptibility beam emitter configured for emitting the perceptibility beam, a measuring beam emitter configured for emitting a measuring beam, and a measuring beam receiver configured for receiving a reflection of the measuring beam, and wherein the measuring beam is used for measuring the distance.

In a further embodiment, the distance meter is configured, when running the perceptibility enhancing mode for adapting the modulation depending on a measured distance to the object, a characteristic of the reflection of the measuring beam, or a status of the surveying instrument (e.g. low battery, or measuring error). An exemplary characteristic may be any beam characteristic that indicates the reflectiveness of the object, e.g. a return pulse shape, a return pulse quality, or a return pulse amplitude.

The modulation may comprise one or more of: an amplitude modulation, a polarisation modulation, a phase modulation, a wavelength, and a frequency modulation.

The modulation may have a pattern that comprises one or more of: a rectangle pattern, a sine pattern, a triangle pattern, and a saw pattern.

The modulation may specifically be a blinking pattern with sudden passages and/or fluent passages, the blinking pattern comprising an alternation between at least two different amplitudes, phases, polarisations, wavelengths, or frequencies.

The perceptibility beam may comprise light from a spectral range visible to the human eye, in particular laser light.

In other embodiments, the perceptibility beam comprises light from a spectral range invisible to the human eye, in particular infra-red light.

Preferably, the perceptibility beam is laser light, and the switching frequency and a duty cycle of the modulation are dimensioned in such a way that a peak power of the perceptibility beam is higher than an average power permitted in a laser class of the perceptibility beam. Specifically, the blinking (modulation) allows for raising a power of the perceptibility beam during the on-time, because the off-time is lowering the average power again. This allows a higher laser power while still complying with the same laser class, as long as integral times of the laser norm are met. This means, that the duty cycle needs to be adapted accordingly. As an example, for complying with laser class 2, the average power needs to be limited to 1 mW during 0.25 s and with a wavelength of 660 nm. The modulation pattern could then be: 2 mW for 0.125 s and 0 mW for 0.125 s; or: 4 mW for 0.0625 s and 0 mW for 0.1975 s; and so on. The first pattern has a duty cycle of 0.5 and the second a duty cycle of 0.25. Both peak powers (2 mW and 4 mW) are above the average (1 mW) of the laser class.

In some embodiments, the surveying instrument further comprises a base, a support mounted on the base and configured for being rotatable relative to the base around an azimuth axis, the distance meter being mounted on the support and configured for being rotatable relative to the support around an elevation axis, a first angle encoder configured for measuring a rotatory position of the support, and a second angle encoder configured for measuring a rotatory position of the distance meter.

The surveying instrument may be configured for receiving a signal from an external device, and in response to the signal, activating the perceptibility enhancing mode or modifying the perceptibility enhancing mode with regard to the modulation. By modifying, a user may manage assignments of specific modulation patterns to one or more surveying instruments.

The invention also relates to a surveying system comprising a surveying instrument according to the above description and a polarised displaying device, wherein the modulation is a polarisation modulation, wherein the polarised display is adapted for the polarisation modulation and configured for allowing a user's eye to perceive the projection of the perceptibility beam on the object.

The invention further relates to a surveying system comprising a surveying instrument according to the above description and an Augmented Reality (AR)-device, wherein the AR-device comprises a camera and an AR-display, wherein the camera is configured for detecting the modulation at the projection of the perceptibility beam on the object, wherein the display is configured for providing an overlay based on the detected modulation.

The AR-device may further be configured for identifying the surveying instrument based on the intensity modulation, wherein the display is configured for providing the overlay based on the identified surveying instrument.

### BRIEF DESCRIPTION OF THE DRAWINGS

By way of example only, preferred embodiments of the invention will be described more fully hereinafter with reference to the accompanying figures, wherein:
Figure 1 shows a first embodiment of a surveying instrument according to the invention;
Figure 2 shows a second embodiment of a surveying instrument according to the invention;
Figure 3 shows a third embodiment of a surveying instrument according to the invention;
Figure 4 shows a fourth embodiment of a surveying instrument according to the invention;
Figure 5 shows embodiments of an intensity modulation of a perceptibility beam projectable with a surveying instrument according to the invention;
Figure 6 shows a rectangle modulation pattern (lower chart) generated by different high frequencies of the perceptibility beam (upper chart);
Figure 7 shows an embodiment of a surveying system according to the invention having a surveying instrument and an AR-device;
Figure 8 shows the embodiment of figure 7 with overlays on a display of the AR-device;

### DETAILED DESCRIPTION OF THE DRAWINGS

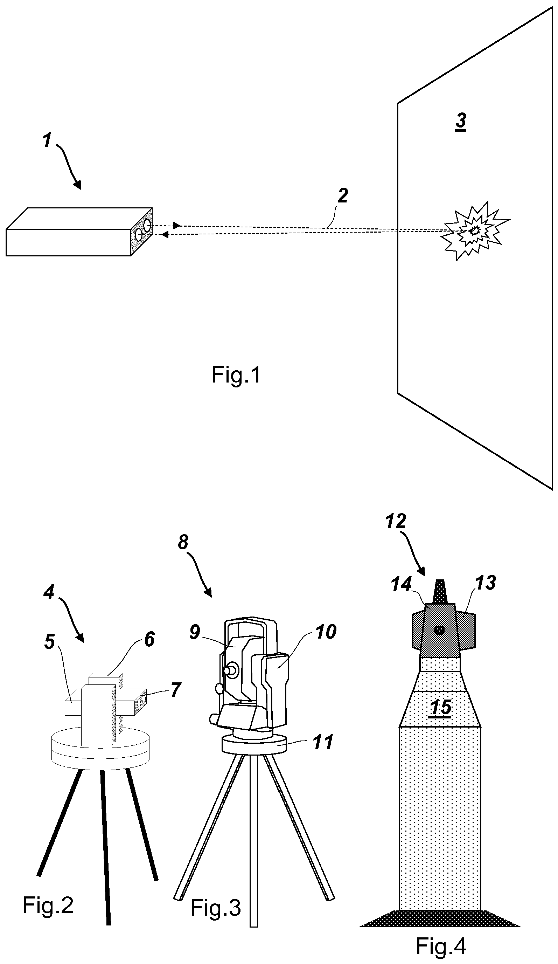

Figure 1 shows a first embodiment 1 of a surveying instrument according to the invention, namely a handheld distance meter. The shown distance meter 1 has two optical units, one for emitting a measuring beam 2 and another one for receiving a reflection of the measuring beam from a surface of an object 3. In this case, the measuring beam 2 is at the same time also a perceptibility beam. In other embodiments, the distance meter may comprise a separate unit (perceptibility beam emitter) configured for providing such perceptibility beam independently from the measuring beam. In any case, even if the term "distance meter" may suggest so, measuring a distance is only one of its functions. The perceptibility beam is particularly a laser beam, such that the perceptibility beam emitter or the measuring beam emitter would be a laser. In other embodiments, however, the perceptibility beam emitter or the measuring beam emitter can by a high radiance (LED) emitter, an SLED, a VCSEL, or any other type of laser emitter with low divergence. The wavelength can vary as well, especially as opposed to the measuring beam, e.g. the perceptibility beam is green or changes between red and green.

The embodiment 1 is configured for running a perceptibility enhancing mode, which helps a user to better perceive the projection of the perceptibility beam 2 on the object 3, i.e. the user can detect faster where the surveying instrument 1 is currently aiming at. When running the perceptibility enhancing mode, the distance meter is directed to emit the perceptibility beam with a modulation, wherein the modulation has a switching frequency of at least 0.25 Hz but lower than 200 Hz.

In a mode other than the perceptibility enhancing mode, the measuring beam 2 may permanently, i.e. uninterruptedly and without a modulation in the range of 0.25 Hz to 200 Hz, be projected onto the object. In any mode, a distance is not necessarily continuously measured, even if a measuring/perceptibility beam is (modulated or unmodulated) projected. In other words, in case the perceptibility beam is at the same time also the measuring beam, the term "measuring" beam does not necessarily mean that a distance is permanently measured with it. A distance can instead also only be measured upon request, e.g. by pressing a button on the surveying instrument 1.

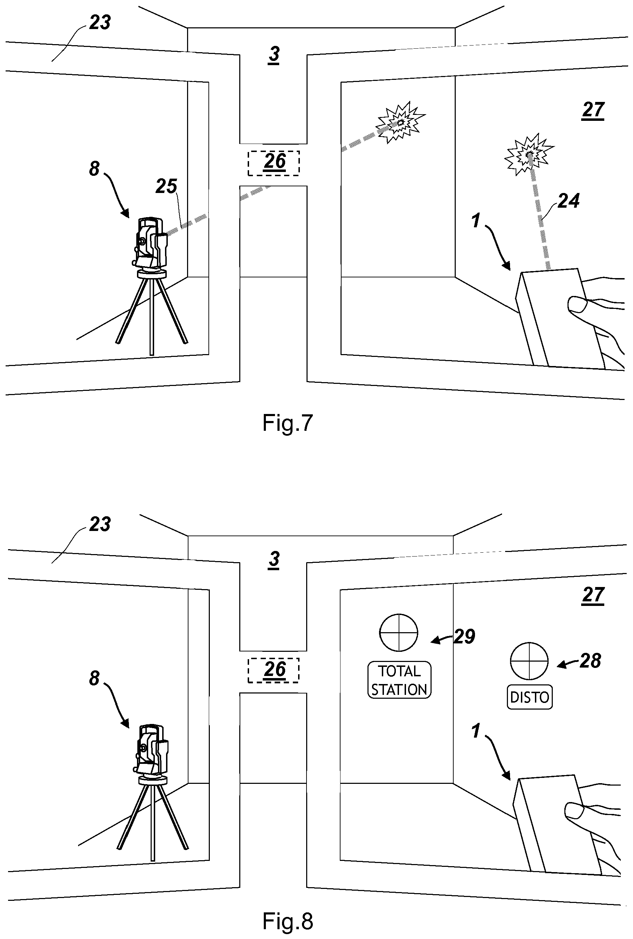

The perceptibility enhancing mode enhances the perceptibility of the currently targeted point on the object by making the projection of the perceptibility beam perceivable to the user by a blinking pattern or flashing pattern of some sort. The blinking is particularly perceptible by the human eye itself, or with support of an AR-device or a polarised displaying device. Further, the rays of the perceptibility beam can be formed by light from the spectrum range that is visible to the human eye or from the infra-red spectral range (or other spectral range that is not visible to the human eye). As an example, an AR-device can have a camera that can detect and particularly also interpret the modulated beam (either from visible or invisible spectrum). In a further example, the projection of the perceptibility beam can be seen on the object, but its modulation cannot because the modulation is a polarisation modulation. In this case, an AR-device or a polarisation displaying device can make the modulation visible to the human eye. More on the AR-device variant will be explained below with respect to figures 7 and 8.

Figure 2 shows another embodiment 4 of a surveying instrument, wherein the distance meter 5 can be the surveying instrument 1 being rotatably mounted (ex-factory or manually clicked in as an extension accessory) into a support 6. The distance meter 5 is rotatable around a horizontal axis (elevation axis) in the support 6. The support 6 is arranged on a base 7 and can rotate around a vertical axis (azimuth axis) relative to the base 7. Respective angle encoders track the rotatory positions of the distance meter 5 and the support 6. Extending the handheld surveying instrument 1 to arrive at a 3D measuring and templating device 4 provides the ability to measure 3D (polar) coordinates instead of merely a distance value.

Yet another embodiment 8 is shown in figure 3. The total station 8 has a distance meter 9, also referred to as targeting unit, a support 10, and a base 11. It shares the features as presented with the surveying instrument 4 in figure 2. The total station 8 is normally used to high-precisely measure positions and to stake out. Because a perceptibility beam of such devices is used very often on constructions sites, the invention is particularly advantageous because it helps the users to find the beam projection at bright day light. For example, when performing a stake-out, a perceptibility beam is aligned in a direction of a point to be staked out. A user is holding a target plate and adjusts the position of the target plate such that the perceptibility beam strikes a centre point of the target plate. At least for this, the user needs to clearly locate the projection, which can be hard given the sometimes unfavourable conditions on a construction site (sun light, rain, etc.).

Furthermore, the perceptibility enhancing mode according to the invention can also be used with the surveying instrument 12 as shown in figure 4. The laser tracker 12 has a distance meter 13 that is rotatably mounted in a support 14 which again is rotatably arranged on a base 15. Again, also the laser tracker 12 shares the features as presented with the surveying instrument 4 in figure 2.

The perceptibility beam can be modulated in one or more ways chosen from: modulation regarding amplitude (intensity), phase, polarisation, wavelength, and regarding frequency.

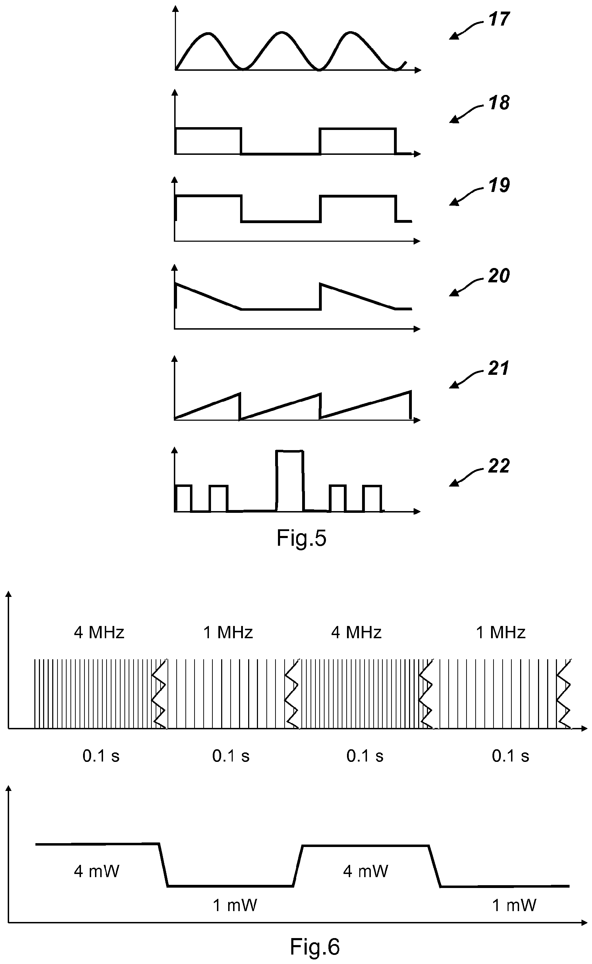

Figure 5 shows six different charts qualitatively displaying a modulation signal (y-axis) over the time (x-axis). The shown patterns can be continued (repetitive patterns) or can be followed by other patterns (non-repetitive patterns) or a blend of the two concepts.

The modulation 17 shows a sine modulation with smooth (fluent) passages between a maximum and a zero amplitude, phase, polarisation, wavelength, and/or pulse frequency. Modulation 18 shows a dipolar pattern with sharp transitions between a maximum and a zero amplitude/phase/polarisation/wavelength/pulse frequency. The modulation 19 shows a dipolar pattern with sudden passages between a first and a second level of amplitude/phase/polarisation/wavelength/pulse frequency that is not zero, e.g. switching between 100% and 50% intensity. Modulations 20 and 21 show two different saw tooth modulations and modulation 22 shows a multipolar pattern with sudden passages, in this case 50%, 0%, 50%, 0%, 100%, 0%, 50%, 0%, 50%. All of these unique modulation patterns can for example also be used to identify a specific surveying instrument (i.e. the perceptibility beam thereof) - either by the user itself (with or without polarised displaying device, e.g. polarised glasses), wherein the user knows which blinking pattern belongs to which surveying instrument, or, in case the blinking is not visible for the human eye, automatically by an AR-device that detects and "interprets" the modulation pattern.

The switching frequency is defined by the moments of a switch (in particular the moment of reaching the new state that has been switched to) with regard to any of the amplitude, the phase, the polarisation, the wavelength, and the pulse frequency. In non-repetitive pattern such as pattern 22 in figure 5, these moments of switch are not necessarily chronologically equally distanced from each other, which is why the "frequency" is sometimes changing. When the present invention presents a switching frequency of between 0.25 Hz and 200 Hz, this means that the moments of switch are chronologically spaced by between 0.005 s and 4 s. That could mean in one example (see pattern 22 in figure 5) that the amplitude can be up at a first value for 0.1 s, then zero for 0.1 s, then again at the first value for 0.1 s, then zero for 0.4 s, then at a second value for 0.2 s, and at zero for another 0.2 s. The pattern could then repeat, or a different pattern could follow. Important to notice is that the moments of switch are spaced apart by an amount in the range of between 0.1 s and 0.4 s, that is the modulation has switching frequencies ranging between 2.5 Hz and 10 Hz.

In particular, a zero amplitude/phase/polarisation/wavelength/pulse frequency in each case means that there is no emission at all. A person of skill in the art may find more patterns or a mix of the shown patterns and/or a mix of what is modulated (amplitude/phase/polarisation/wavelength/pulse frequency) that all lie within the scope of the invention, as long as the patterns have the advantageous frequency of between 0.25 Hz and 200 Hz.

It is emphasised that the modulation of the perceptibility beam has a low frequency relative to any potential high-frequency modulation (in the kHz/MHz-range) that the beam might have. Figure 6 shows that the perceptibility beam is modulated (similarly to the pattern 19 shown in figure 5) by switching between two (high-frequency) frequency modulations. For example, the switching modulation is 10 Hz here (signal frequency is 5 Hz because it is a repetitive pattern) which means that the frequency of the perceptibility beam is switching every 0.1 s between 4 MHz and 1 MHz, and in consequence, the power switches between 4 mW and 1 mW. The human eye and a camera cannot follow this high-frequency modulation, but they can perceive the low-frequency power modulation (switching between 4 and 1 mW, or respectively: 4 MHz pulse rate and 1 MHz pulse rate) with the pace of 10 Hz. A frequency preferably perceptible for the human eye is between about 0.25 Hz and 20 Hz, and for a camera, the frequency can be as high as reaching the exposure time range, i.e. for example up to 200 Hz or higher. The low-frequency modulation can mean in one example that the perceptibility beam "blinks" by switching between two or more different amplitudes (intensities), phases, polarisations, wavelengths, and/or frequencies in a switching frequency of between 0.25 Hz and 200 Hz.

The power modulation of the perceptibility beam as shown in the lower part of figure 6 could also be achieved in other ways. That is, contrary to the change between 4 and 1 MHz as shown in figure 6, the frequency could also stay at 4 MHz permanently, while the amplitudes or the pulse widths of the high-frequency pulses are switching (in the low-frequency pattern) between a higher value and a lower value, therewith also achieving a low-frequency power modulation that is perceptible by the human eye, optionally with the help of polarised glasses and/or an AR-device.

In other embodiments, the perceptibility beam modulation can be irregularly repetitive. It can comprise a defined or random sequence of modulations, as long as their switching remains in the defined frequency range of 0.25 Hz and 200 Hz. For example, a perceptibility beam can change its colour randomly and/or in a random interval.

A surveying instrument according to the invention can, in one embodiment, (when running the perceptibility enhancing mode) also adapt the modulation depending on a measured distance to the object. For example, there are two surveying instruments according to the invention in the room, both aiming towards a wall that a user is viewing. The user would then normally struggle to find out which spot on the wall belongs to which surveying instrument. Now with this specific adaptation functionality, the surveying instrument farther away from the wall could measure the distance and adapt the intensity modulation according to a pre-set rule, for example the blinking frequency is lowered or the maximum intensity is lowered. In another example, the on-phases and/or dimmed/off-phases of the blinking could be lengthened or shortened. Thus, the spots can easily be distinguished by their appearance.

In another embodiment, the output power for the perceptibility beam may be adjusted depending on a currently measured distance. For example, the power output can be increased when a longer distance is detected while still meeting laser safety criteria.

In further embodiments, the modulation can be designed to be easily interpreted by a user with respect to a device status. For example, if an error occurred at the surveying instrument, or its battery status is low, the modulation can cause a blinking of the perceptibility beam in an S-O-S Morse signal.

According to a further embodiment, the surveying instrument can be linked to an external controller device (e.g. smart phone), on which the user can, via a trigger signal, activate and/or deactivate the perceptibility enhancing mode on demand in order to help him find it or when faced with two spots on a wall each from a different surveying instrument and not knowing which of the spots is from which surveying instrument. In a further embodiment, while linked with the external controller device, the user can also adapt the intensity modulation of a particular surveying instrument to his wishes, e.g. in order to make it even more distinguishable or perceptible.

In one variation, the perceptibility beam can also alternatively or additionally be jittered or spun in a circle to further increase the perceptibility. This might be realised with a rotating mirror inside the distance meter or with a microelectromechanical system. Alternatively, a jittering may be induced by moving the respective component(s) around their axis/axes (see instruments according to figures 2, 3, and 4).

Another embodiment of the invention relates to a surveying system as shown in figures 7 and 8. Perceptibility beams 25 and 24 are provided by the handheld surveying instrument 1 and the total station 8. The beams shall be in this example from the infra-red spectrum, however this embodiment is not restricted to infra-red beams, but can also be applied with a perceptibility beam visible to the human eye or from a spectral range non-visible but other than infra-red. A user wears an AR-device comprised by the surveying system which is embodied in the present example as AR-glasses 23. The AR-device 23 has a camera 26 with a field of view aligned with the viewing direction of the user, thereby capturing the environment 3. For lucidity's sake, although both showing the same situation, figures 7 and 8 are split in order to show the actually invisible IR beams only in the first and the AR-overlays only in the latter figure. The camera 26 is configured to sense infra-red rays and therewith locate the projected infra-red perceptibility beams 24 and 25 relative to the user's eyes. In particular, the projection may be sensed and located based on the modulation pattern (independently from whether or not the perceptibility beam is formed of light from a spectral range visible to the human eye).

Based on the detected location(s) of the flashing spot(s) on the wall 3, the AR-glasses 23 can now provide its display 27 (e.g. the windows of the glasses) with overlays 29 and 28. Crosshairs 29 show the current projection spot of the perceptibility beam 25 coming from the distance meter of the total station 8, and crosshairs 28 show the current projection spot of the perceptibility beam 24 coming from the distance meter of the surveying instrument 1. Provided with such a system, a user is significantly supported by immediately being briefed about the (several) surveying instrument(s) alignment(s).

In particular, the system also may help the user to distinguish between at least two projections of different surveying instruments. As figure 8 shows the overlays 28 and 29 also with labels (which are optional) "TOTAL STATION" and "DISTO", the user can immediately identify from which device the spots are coming. For this identification functionality, the AR-device 23 is configured for interpreting, or receiving an interpretation of, the modulation of the perceptibility beam spots on the wall 3. Thus, the two surveying instruments 1 and 8 use different modulation patterns, e.g. chosen from the patterns displayed in figure 5, that are stored on or retrievable by the AR-device in order to compare them with the reflections detected by the camera 26.

The AR-device is shown as glasses, but in other embodiments, the AR-device can also be a smart phone, a tablet computer, an AR-helmet, or a signs device (used for applying markings on a wall).

Although the invention is illustrated above, partly with reference to some preferred embodiments, it must be understood that numerous modifications and combinations of different features of the embodiments can be made. All of these modifications lie within the scope of the appended claims.

## Claims

1. A surveying instrument comprising a distance meter,
- wherein the distance meter is configured for
∘ projecting a perceptibility beam onto an object and
∘ measuring a distance to the object,
- wherein the distance meter is configured for running a perceptibility enhancing mode,
- wherein, when running the perceptibility enhancing mode, the distance meter is directed to emit the perceptibility beam with a modulation,
- wherein the modulation has a switching frequency of at least 0.25 Hz but lower than 200 Hz.

2. The surveying instrument according to claim 1,
- wherein the perceptibility beam is a measuring beam,
- wherein the distance meter comprises a measuring beam emitter configured for emitting the measuring beam and a measuring beam receiver configured for receiving a reflection of the measuring beam, and
- wherein the measuring beam is used for measuring the distance.

3. The surveying instrument according to claim 1,
- wherein the distance meter comprises a perceptibility beam emitter configured for emitting the perceptibility beam, a measuring beam emitter configured for emitting a measuring beam, and a measuring beam receiver configured for receiving a reflection of the measuring beam, and
- wherein the measuring beam is used for measuring the distance.

4. The surveying instrument according to claim 2 or 3, wherein, when running the perceptibility enhancing mode, the distance meter is configured for adapting the modulation depending on
- a measured distance to the object,
- a characteristic of the reflection of the measuring beam, or
- a status of the surveying instrument.

5. The surveying instrument according to any of the preceding claims, wherein the modulation comprises an amplitude modulation, a polarisation modulation, a phase modulation, a wavelength modulation, and/or a frequency modulation.

6. The surveying instrument according to any of the preceding claims, wherein the modulation has a pattern that comprises a rectangle pattern, a sine pattern, a triangle pattern, and/or a saw pattern.

7. The surveying instrument according to any of the preceding claims,
- wherein the modulation is a blinking pattern with sudden passages and/or fluent passages, and
- wherein the blinking pattern comprises an alternation between at least two different amplitudes, phases, polarisations, wavelengths, or frequencies.

8. The surveying instrument according to any of the preceding claims, wherein the perceptibility beam comprises light from a spectral range visible to the human eye, in particular laser light.

9. The surveying instrument according to any of the preceding claims, wherein the perceptibility beam comprises light from a spectral range invisible to the human eye, in particular infra-red light.

10. The surveying instrument according to any of the preceding claims,
- wherein the perceptibility beam is laser light, and
- wherein the switching frequency and a duty cycle of the modulation are dimensioned such that a peak power of the perceptibility beam is higher than an average power permitted in a laser class of the perceptibility beam.

11. The surveying instrument according to any of the preceding claims, further comprising
- a base,
- a support mounted on the base and configured for being rotatable relative to the base around an azimuth axis,
- the distance meter being mounted on the support and configured for being rotatable relative to the support around an elevation axis,
- a first angle encoder configured for measuring a rotatory position of the support, and
- a second angle encoder configured for measuring a rotatory position of the distance meter.

12. The surveying instrument according to any of the preceding claims, configured for
- receiving a signal from an external device, and,
- in response to the signal, activating the perceptibility enhancing mode or modifying the perceptibility enhancing mode with regard to the modulation.

13. A surveying system comprising a surveying instrument according to any of claims 1 to 13 and a polarised displaying device,
- wherein the modulation is a polarisation modulation,
- wherein the polarised display is adapted for the polarisation modulation and configured for allowing a user's eye to perceive the projection of the perceptibility beam on the object.

14. A surveying system comprising a surveying instrument according to any of the preceding claims and an Augmented Reality (AR)-device,
- wherein the AR-device comprises a camera and an AR-display,
- wherein the camera is configured for detecting the modulation at the projection of the perceptibility beam on the object,
- wherein the display is configured for providing an overlay based on the detected modulation.

15. The surveying system according to claim 14,
- wherein the AR-device is configured for identifying the surveying instrument based on the modulation, wherein the display is configured for providing the overlay based on the identified surveying instrument.
